# EUROPEAN PATENT APPLICATION

(11) **EP 2 281 463 A1**
(43) Date of publication of application: **09.02.2011**
(21) Application number: 09167441.6
(22) Date of filing: 07.08.2009
(51) Int. Cl.: A23F 3/40

(54) **Method for manufacturing aromatised plant material**

(71) Applicant: Unilever PLC, A Company Registered In England And Wales under company no. 41424 of Unilever House, 100 Victoria Embankment London EC4Y 0DY (GB)
(72) Inventor: Griffiths, Allen, Sharnbrook, Bedfordshire MK44 1LQ, (GB); Humphrey, Philip Graham,, Raunds, Northhamptonshire NN9 6LD, (GB); Peilow, Alan David, Sharnbrook, Bedfordshire MK44 1LQ, (GB)
(74) Representative: Keenan, Robert Daniel

(57) **Abstract**

Disclosed is a method for manufacturing aromatised plant material, such as leaf tea. The method comprises: providing an homogenous mass of plant material; arranging the mass of plant material to extend from a first point (P1) to a second point (P2) distal from the first point, there being a gas-permeable path (P) connecting the first and second points; providing the plant material at the first point (P1) with an aroma composition comprising at least one aroma compound in an amount to form a concentration gradient of the at least one aroma compound along the gas permeable path (P); allowing the concentration gradient to evolve for a migration time (t); and dividing the mass along the path (P) into a plurality of fractions of aromatised plant material (1, 2, 3, 4), wherein at least two of the fractions differ in the concentration of the at least one aroma compound.

## Description

### Technical Field of the Invention

The present invention relates to the manufacture of aromatised plant material, especially aromatised leaf tea. In particular, the present invention relates to an improved method for the production of a variety of aromatised portions or fractions of plant material.

### Background of the Invention

Tea aroma is one of the most important factors for determining tea quality. The aroma profile of the final tea product is determined, to a large extent, by the processing conditions employed during manufacture. In particular, some aroma compounds are generated during heat-treatment steps, such as a drying step. Thus, when seeking to improve the aroma profile of heavily-processed tea products (such as "instant" tea powders and concentrates) it has been known to add aromas recovered from "made tea" (i.e. tea already having undergone a drying step).

It is also known to scent leaf teas with aromas from other plants. For example jasmine tea, wherein green tea is scented with jasmine blossoms, is popular in China.

Consumers are constantly looking for foods and beverages with new and interesting tastes and aromas. Thus, whilst the existing processes for aromatisation of tea and other plant materials, such as coffee, are suitable for efficiently producing a large amount of aromatised plant material with a single and consistent aroma profile, we have recognised that there is a need to provide a process capable of simultaneously providing a plurality of different aromatised products from a single plant material base.

We have now found that the migration of aroma compounds in a gas phase, and differences in the partition coefficients between plant material (such as tea leaves) and the gas phase for different aroma compounds, can be effectively used to simultaneously and simply manufacture a plurality of different aromatised products.

WO 2007/039018 (Unilever) discloses a process for manufacturing a leaf tea product. The process comprises the steps of providing fresh tea leaf, recovering aroma from the fresh tea leaf, and drying the fresh tea leaf to form the leaf tea product. The aroma is recovered whilst at least partially drying the fresh leaf in a low-convection dryer. The aroma is preferably recovered as a condensate and the condensate may be adsorbed on to one or more adsorbents selected from activated charcoal, resins, zeolites, and tea (e.g. black tea). WO 2007/039018 also teaches that when the exhaust gases are adsorbed on to tea itself, further desorption is not necessary. However there is no teaching in WO 2007/039018 that the aroma condensate can be adsorbed onto tea to simultaneously manufacture a plurality of leaf tea products with different aroma profiles.

US 3,717,472 (The Procter & Gamble Co.) discloses the separation of aroma- and flavor-bearing substrates into an aroma concentrate and a flavor concentrate by pulsing or applying in a continuous fashion wet steam to a zone containing the substrate. The substrate-containing zone is held under vacuum pressure and the flavor concentrate is collected in a first trap, while an aroma concentrate is collected in a second trap. In a preferred embodiment, the substrate comprises either coffee or tea. The teaching of US 3,717,472 is thus production of an aroma concentrate from plant material and again there is no teaching in US 3,717,472 that the aroma condensate can be adsorbed onto tea to simultaneously manufacture a plurality of leaf tea products with different aroma profiles.

### Tests and Definitions

### AROMA COMPOUND

As used herein, the term "aroma compound" is used to denote an organic compound which is volatile and able to be detected by the human nose. By volatile is meant that it will have a vapour pressure of at least 1 Pa at 25°C. Preferably the aroma compound is methanol, acetaldehyde, dimethyl sulphide, 2-methyl-propanal, 2-methyl butanal, 3-methyl butanal, 1-penten-3-one, hexanal, 1-penten-3-ol, E-2-hexenal, Z-3-hexenyl acetate, Z-2-penten-1-ol, hexan-1-ol, Z-3-hexenol, E-2-hexenol, cis-linalool oxide, 1-octen-3-ol, trans-linalool oxide, linalool, α-terpinol, phenyl acetaldehyde, methyl salicylate, geraniol, benzyl alcohol, 2-phenylethanol, Z-4-heptenal, E,Z-2,6-nonadienal, Z-3-hexenal, Z-1,5-octadien-3-ol, Z-1,5-octadien-3-one, methional, E-2-nonenal, indole, E-2-octenal, 1-octen-3-one, beta-ionone or a mixture thereof.

### TOTAL ORGANIC CARBON

The total organic carbon (TOC) content of an aroma composition is a measure of the total concentration of aroma compounds in the composition. Analysis of TOC is based upon a combustion method.

The TOC measurements were made using a Shimadzu TOC-V Carbon Analyser, an automated system that analyses aqueous samples for Total Carbon (TC) and Total Inorganic Carbon (TIC). The combustion tube is filled with platinum catalyst and heated to 680°C. Carrier gas (purified air) is supplied to this tube. A sample is injected and all the carbon oxidised to CO₂ which is measured using an infra-red analyser.

TOC is measured by using a 'by difference' method whereby Total Carbon (TC) and the Total Inorganic Carbon (TIC) of a sample are measured, the difference being the Total Organic Carbon (TOC). The aroma compositions do not contain inorganic carbon and therefore the TC data has been used as a direct measure of TOC.

### TEA

"Tea" for the purposes of the present invention means material from *Camellia sinensis* var. *sinensis* or *Camellia sinensis* var. *assamica.* It also includes rooibos tea obtained from *Aspalathus linearis.* "Tea" is also intended to include the product of blending two or more of any of these materials.

"Leaf tea" refers to tea in an uninfused form and that has been dried to a moisture content of less than 30% by weight, and usually has a water content in the range 1 to 10% by weight (i.e. "made tea").

Leaf tea may comprise fermented tea (i.e. black tea), semi-fermented tea (i.e. oolong tea) and/or substantially unfermented tea (i.e. green tea). "Fermentation" refers to the oxidative and hydrolytic process that tea undergoes when certain endogenous enzymes and substrates are brought together, e.g., by mechanical disruption of the cells by maceration of the leaves. During this process colourless catechins in the leaves are converted to a complex mixture of yellow and orange to dark-brown polyphenolic substances.

### Summary of the Invention

The present invention provides a method for manufacturing aromatised plant material, the method comprising the following steps:
(a) providing an homogenous mass of plant material;
(b) arranging the mass of plant material to extend from a first point to a second point distal from the first point, there being a gas-permeable path connecting the first and second points;
(c) providing the plant material at the first point with an aroma composition comprising at least one aroma compound in an amount to form a concentration gradient of the at least one aroma compound along the gas permeable path;
(d) allowing the concentration gradient to evolve for a migration time (t); and
(e) dividing the mass along the path into a plurality of fractions of aromatised plant material, wherein at least two of the fractions differ in the concentration of the at least one aroma compound.

The method of the invention provides one or more of the following advantages:
- It allows for the simultaneous manufacture of a plurality of products with different aroma profiles from a single plant material base (e.g. tea leaves).
- It does not require the use of fluidisation of the plant material and / or forced transport of the aroma and thus there is no need for expensive mixing devices, pumps or organic solvents.
- It does not require steam to be used to transport the aroma and so minimises or removes the need for drying the fractions after aromatisation.
- The aroma is automatically partitioned along the path and so there is no need for complex and expensive liquid/liquid or liquid/gas separation equipment to fractionate the aroma.
- There is no need to agitate the plant material during aromatisation and so the process can conveniently be effected during storage and/or shipping of plant material.

### Brief Description of the Drawings

The present invention will be further described with reference to drawings in which:
Figure 1a shows a schematic sectional view of an apparatus for use in the method of a preferred embodiment of the invention at the start of the migration time.
Figure 1b shows the apparatus of Fig. 1a at the end of the migration time.
Figure 2a shows a schematic sectional view of an apparatus for use in the method of another preferred embodiment of the invention at the start of the migration time.
Figure 2b shows the apparatus of Fig. 2a at the end of the migration time.

### Detailed Description

### PLANT MATERIAL

Step (a) of the method comprises providing an homogenous mass of plant material.

There is no limitation on the type of plant material which may be used in the present invention, however, the invention is particularly suitable for aromatisation of solid beverage precursor material such as leaf tea or coffee solids.

It is preferred that the plant material is dried as this allows for efficient absorption of aroma and limits or removes the need for drying the material after aromatisation.

The most preferred plant material is leaf tea, more preferably still black leaf tea.

By "homogenous" is meant that a single base of plant material is used. In other words the plant material along the gas permeable path is from substantially the same plant and has substantially the same structure.

### ARRANGING THE PLANT MATERIAL

Step (b) of the method comprises arranging the mass of plant material to extend from a first point to a second point distal from the first point, there being a gas-permeable path connecting the first and second points.

It is particularly preferred that the mass of plant material and the gas-permeable path are mutually enclosed in an air-tight manner such that aroma cannot escape to the surroundings.

In one arrangement, the mass of plant material is in a continuous bed extending from the first point to the second point. For example the plant material could be arranged in a column or packed in a tube or sack or other suitable container. The gas permeable path would then be the headspace within the container and/or spaces between particles of plant material.

In a preferred arrangement, the mass of plant material is divided into a plurality of portions, each portion being within a compartment, and wherein each compartment is in communication with at least one of the other compartments via at least one gas permeable wall and/or conduit. This arrangement is especially preferred as it allows for easy division of the mass into a plurality of fractions in step (e) and avoids the risk that plant material will mix along the path during and/or after aromatisation which is undesirable as it would result in reducing the difference in aroma between the different factions. Preferred embodiments of this arrangement are illustrated in the drawings.

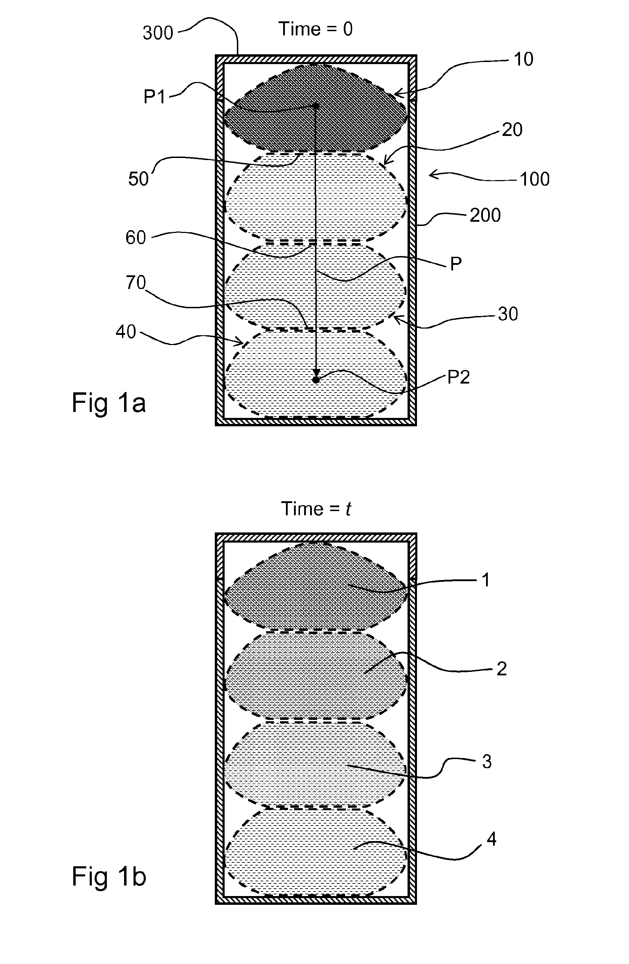

Figure 1a shows a mass of plant material (e.g. black leaf tea) arranged in a plurality of compartments (10, 20, 30, 40). Each compartment (10, 20, 30, 40) is formed from a bag made from a gas permeable material, such as filter paper, muslin or similar. The compartments (10, 20, 30, 40) are stacked vertically in series within a container (100) comprising a cylindrical body (200) enclosed at the top in an air-tight manner with a removeable lid portion (300). Gas can permeate around the plant material and through the walls (50, 60, 70) of the compartments (10, 20, 30, 40) such that a gas permeable path (P) extends from a point (P1) in the topmost compartment (10) to a point (P2) the bottommost compartment (40).

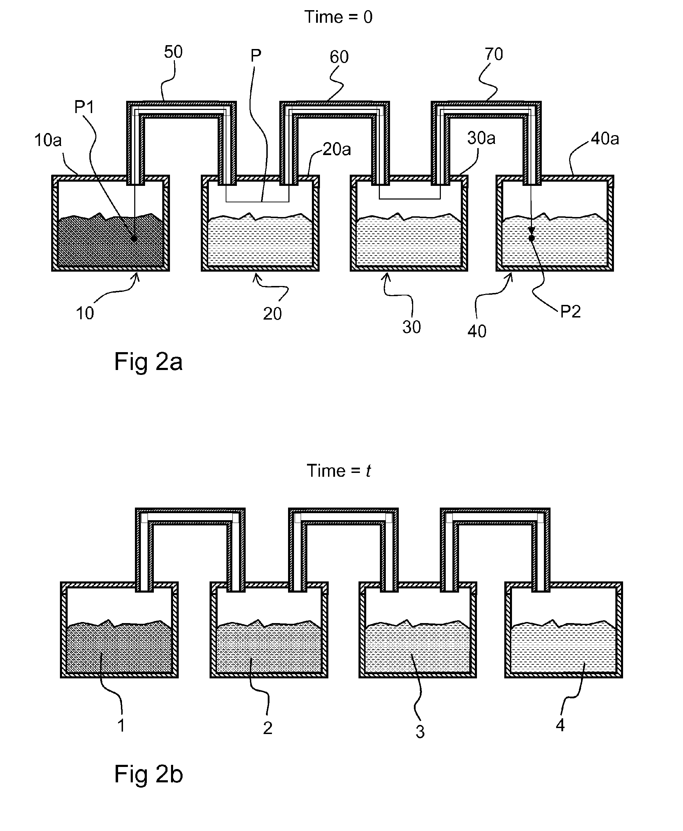

In the alternative embodiment shown in Figure 2a a mass of plant material (e.g. black leaf tea) is also arranged in a plurality of compartments (10, 20, 30, 40) but in this case each compartment (10, 20, 30, 40) is formed from a container comprising a body enclosed at the top in an air-tight manner with a removeable lid portion (10a, 20a, 30a, 40a). A first compartment (10) is in fluid communication with to a second compartment (20) via a conduit (50). The second compartment (20) is similarly in fluid communication with a third compartment (30) via a second conduit (60) and the third compartment (30) is in fluid communication with a fourth compartment (40) via a third conduit (70). Thus a gas permeable path (P) extends from a point (P1) in the first compartment (10) to a point (P2) the fourth compartment (40) via the second (20) and third (30) compartments.

### FORMING THE CONCENTRATION GRADIENT

Step (c) of the method comprises providing the plant material at the first point with an aroma composition comprising at least one aroma compound in an amount to form a concentration gradient of the at least one aroma compound along the gas permeable path.

Preferably the at least one aroma compound is part of a liquid aroma composition which is combined with the plant material in step (c). For example, the liquid aroma composition may be sprayed or otherwise coated onto the plant material at the first point. The liquid aroma composition preferably has an aroma content (in terms of TOC) in the range of 5000 mg/l to 900 g/l, more preferably in the range 10 g/l to 800 g/l and most preferably in the range 100 g/l to 700 g/l.

Aromas derived from tea are found to work particularly well in the method of the present invention, particularly when the plant material is leaf tea. Thus the at least one aroma compound is preferably derived from tea, more preferably the at least one aroma compound is part of a tea aroma oil. Tea aroma may be obtained, for example, using the method described in WO 2007/039018, the contents of which are hereby incorporated by reference in their entirety.

Concentration gradients of the at least one aroma compound are illustrated schematically in Figures 1a and 2a for preferred embodiments, wherein the darker shade of the plant material at the first point (P1) represents a higher concentration of an aroma compound (e.g. linalool) compared with the lighter shade of the plant material at the second point (P2).

### EVOLUTION OF THE CONCENTRATION GRADIENT

Step (d) of the method of the invention comprises allowing the concentration gradient to evolve for a migration time (t).

Evolution of the concentration gradient may be forced by advection, e.g. by flowing a carrier gas such as air or steam along the path, but in a preferred embodiment the at least one aroma compound is allowed to migrate along the path by diffusion only.

The migration time may therefore be relatively long. For example, t may be at least 1 hour, more preferably at least 4 hours and most preferably at least 12 hours. Surprisingly we have found that even after many days the concentration gradient does not completely disappear. Thus t may, for example, be up to 60 days, more preferably up to 30 days, more preferably still up to 20 days and most preferably up to 10 days.

To maximise the difference in aroma between the different fractions, it is preferred that the plant material is not agitated during the migration time. It is especially preferred that substantially no mixing of plant material occurs along the path during the migration time. Most preferably the mass of plant material is substantially static during the migration time.

The method of the present invention is found to work effectively even at room temperature. Thus it is preferred that during the migration time, the plant material is at a temperature of from 0 to 80°C, more preferably 5 to 60°C and most preferably 10 to 40°C.

### RECOVERY OF AROMATISED FRACTIONS

Step (e) of the method comprises dividing the mass along the path into a plurality of fractions of aromatised plant material wherein at least two of the fractions differ in the concentration of the at least one aroma compound.

Preferably each of the fractions differs in the concentration of the aroma compound compared with each other of the fractions.

Concentration gradients of the at least one aroma compound are illustrated schematically in Figures 1b and 2b at the end of the migration time for preferred embodiments of the invention. Again darker shades are used to indicate a higher concentration of the at least one aroma compound (e.g. linalool). In each of these embodiments there are four fractions (1, 2, 3, 4) of aromatised plant material. The plant material in successive compartments (10, 20, 30, 40) along the path (P) has a progressively lower concentration of the at least one aroma compound, such that faction 1 has the highest concentration and fraction 4 has the lowest concentration of the aroma compound.

### Examples

The present invention will now be illustrated by reference to the following non-limiting examples.

### EXAMPLE 1

50 g of Kenyan black leaf tea was packed into a rectangular foil sachet (30 cm x 7 cm), and 75 µL of tea aroma oil was injected into the tea at one end of the sachet. The sachet was sealed and stored for 8 days at 20°C. At the end of this period, the sachet was carefully cut open lengthwise, and the tea divided into 6 fractions, according to the distance from the injection point. Samples of these fractions were brewed and tasted. The results of the tasting were as follows:

| Distance from Injection Point | Comments |
|---|---|
| 0 - 5 cm | Floral/medicinal, very strong |
| 5 - 10 cm | Floral/medicinal, strong |
| 10 - 15 cm | Almonds/green/floral |
| 15 - 20 cm | Almonds/green |
| 20 - 25 cm | Faint greenish note |
| 25 - 30 cm | Normal black tea/weak flavor |

The experiment was repeated and samples of the aromatized leaf tea were analyzed after the 8 day storage period by headspace gas chromatography. The concentration of selected aroma compounds is given in Table 1 expressed relative to the concentration of each aroma compound in the leaf at the injection point.

**TABLE 1**

| **Distance from injection point (cm)** | **Relative peak area (normalized)** | | | | |
|---|---|---|---|---|---|
| | **Linalool (%)** | **Methylsalicylate (%)** | **E-2-hexenal (%)** | **Z-3-hexen-1-ol (%)** | **methanol (%)** |
| 0 | 100 | 100 | 100 | 100 | 100 |
| 10 | 5.2 | 2.5 | 71.0 | 38.6 | 82.0 |
| 20 | 0.3 | 0.7 | 29.6 | 3.4 | 66.3 |
| 30 | 0.3 | 0.8 | 15.2 | 0.0 | 63.8 |

### EXAMPLE 2

Four portions of tea (125 g each) were each wrapped in a giant "tea bag" made out of heat sealable tea bag material. Before wrapping, one of the portions was aromatized with 750 µL of tea aroma condensate oil, which was mixed in by stirring mechanically. The wrapped aromatized fraction was placed at the bottom of a Kilner jar and the other three bags stacked on top of it in series. The jar was then sealed and kept in a dark cupboard at 20°C for one week. The portions were then removed for tasting and also for chemical analysis.

Each portion was found to have a distinctly different aroma profile and produced beverages having different organoleptic properties.

The aroma concentration for selected compounds is given in Table 2 expressed relative to the concentration of each aroma compound in the bottom (aromatized) portion.

**TABLE 2**

| **Portion** | **Relative peak area (normalized)** | | | | |
|---|---|---|---|---|---|
| | **Linalool (%)** | **Methylsalicylate (%)** | **E-2-hexenal (%)** | **Z-3-hexen-1-ol (%)** | **methanol (%)** |
| 1^{st} (BOTTOM) | 100 | 100 | 100 | 100 | 100 |
| 2^{nd} | 25.2 | 27.2 | 81.4 | 59.3 | 97.8 |
| 3^{rd} | 5.6 | 5.6 | 72.3 | 37.9 | 89.4 |
| 4^{th} (TOP) | 0.8 | 2.4 | 68.8 | 22.2 | 88.8 |

## Claims

1. A method for manufacturing aromatised plant material, the method comprising the following steps:
(a) providing an homogenous mass of plant material;
(b) arranging the mass of plant material to extend from a first point (P1) to a second point (P2) distal from the first point, there being a gas-permeable path (P) connecting the first and second points;
(c) providing the plant material at the first point (P1) with an aroma composition comprising at least one aroma compound in an amount to form a concentration gradient of the at least one aroma compound along the gas permeable path (P);
(d) allowing the concentration gradient to evolve for a migration time (t); and
(e) dividing the mass along the path (P) into a plurality of fractions of aromatised plant material (1, 2, 3, 4), wherein at least two of the fractions differ in the concentration of the at least one aroma compound.

2. A method according to claim 1 wherein the plant material is dried.

3. A method according to claim 2 wherein the plant material is leaf tea, preferably a black leaf tea.

4. A method according to any one of the preceding claims wherein the at least one aroma compound is derived from tea.

5. A method according to any one of the preceding claims wherein the at least one aroma compound is part of a liquid aroma composition which is combined with the plant material at the first point (P1) in step (c).

6. A method according to any one of claims 1 to 5 wherein the mass of plant material in step (b) is divided into a plurality of portions, each portion being within a compartment (10, 20, 30, 40), and wherein each compartment is in communication with at least one of the other compartments via at least one gas permeable wall and/or conduit (50, 60, 70).

7. A method according to any one of claims 1 to 5 wherein the mass of plant material in step (b) is arranged in a continuous bed extending from the first point (P1) to the second point (P2).

8. A method according to any one of the preceding claims wherein the migration time (t) is at least 1 hour.

9. A method according to any one of the preceding claims wherein the mass of plant material is substantially static during the migration time (t).
